# EUROPÄISCHE PATENTSCHRIFT

(11) **EP 2 241 738 B1**
(45) Veröffentlichungstag und Bekanntmachung des Hinweises auf die Patenterteilung: **16.05.2012**
(21) Anmeldenummer: 10002712.7
(22) Anmeldetag: 15.03.2010
(51) Int. Cl.: F02C 7/04, B64C 11/14

(54) **Einlaufkonus aus Faserverbundmaterial für ein Gasturbinentriebwerk**
Inlet cone made of compound fibre material for a gas turbine engine
Cône d'entrée en matériau composite renforcé en fibre pour une turbine à gaz

(30) Priorität: 09.04.2009 DE 102009016802
(43) Veröffentlichungstag der Anmeldung: 20.10.2010
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE)
(74) Vertreter: Weber, Joachim

(56) Entgegenhaltungen:
- EP-A2- 0 294 654
- DE-A1-102005 013 421
- GB-A- 2 363 170
- GB-A- 2 398 353

## Beschreibung

Die Erfindung betrifft einen Einlaufkonus für ein Gasturbinentriebwerk, der einstückig aus Faserverbundmaterial mit sich kreuzenden, im Wesentlichen in Längsrichtung erstreckenden Faserlagen gewickelt ist und über einen an dessen Innenseite angeformten Befestigungsbund mit einem Befestigungsflansch eines an der Fanrotorscheibe befestigten Halterings verbunden ist.

Der dem Fan eines Gasturbinentriebwerks stromauf zugeordnete und an der Rotorscheibe befestigte Einlaufkonus soll zum einen eine möglichst verwirbelungsfreie Einlaufströmung in das Triebwerk bewirken und zum anderen durch auftreffende Fremdkörper bedingte Schäden verhindern oder begrenzen.

Ein aus der DE 10 2005 013 421 A1 bekannter, einstückig aus Fasermaterial gefertigter Einlaufkonus umfasst einen an der Innenseite, und zwar im Übergangsbereich zwischen einem Konusteil und einem bis an den Fan reichenden Verlängerungsteil, angeformten Befestigungsbund oder verstärkten Befestigungsbereich. Dieser Befestigungsbereich ist mit einer axialen Anschlagfläche an einem am Fan befestigten Haltering gelagert. Die Verbindung des Einlaufkonus mit dem Haltering erfolgt im Bereich des Befestigungsbundes mittels im Winkel zur axialen Anschlagfläche schräg angestellten Schraubenbolzen. Die so ausgebildete Verbindung zeichnet sich durch eine einfache Montage sowie durch eine hohe Festigkeit und eine lange Lebensdauer aus. Das Konusteil, das Verlängerungsteil und der Befestigungsbund können vorteilhafterweise einstückig in maschineller Wickeltechnik aus Faserverbundmaterial gefertigt werden.

Darüber hinaus wurde bereits ein aus Faserverbundmaterial hergestellter Einlaufkonus mit einem Befestigungsbund vorgeschlagen, der eine im Wesentlichen parallel zur Außenfläche des Einlaufkonus verlaufende, das heißt konisch ausgebildete Anlagefläche aufweist, die an einer gleichermaßen konisch verlaufenden Anlagefläche eines am Haltering vorgesehenen Befestigungsflansches anliegt. Die feste Verbindung zwischen dem Einlaufkonus und dem Befestigungsflansch eines Halterings erfolgt auch in diesem Fall mit Befestigungselementen, zum Beispiel mit senkrecht zur konischen Anlagefläche ausgerichteten Schraubenbolzen.

Die Verbindung zwischen dem aus Faserverbundmaterial bestehenden Einlaufkonus und dem metallischen Haltering bereitet insofern Schwierigkeiten, als aufgrund des sehr unterschiedlichen thermischen Ausdehnungsverhaltens der beiden Werkstoffe hohe Eigenspannungen erzeugt werden, die einer dauerhaften und schädigungsfreien Verbindung der beiden Bauteile entgegenstehen.

Der Erfindung liegt daher die Aufgabe zugrunde, den Verbindungsbereich zwischen einem aus Faserverbundmaterial bestehenden Einlaufkonus und einem metallischen Haltering so auszubilden, so dass ein vermindertes Schädigungsverhalten und eine lange Lebensdauer gewährleistet sind.

Erfindungsgemäß wird die Aufgabe mit einem gemäß den Merkmalen des Patentanspruchs 1 im Verbindungsbereich ausgebildeten Einlaufkonus und Haltering gelöst. Vorteilhafte Weiterbildungen der Erfindung sind Gegenstand der Unteransprüche.

Der Kern der Erfindung besteht in der Kombination folgender Merkmale des Befestigungsflansches und des Befestigungsbundes: Der Befestigungsflansch des Halterings ist zur Anpassung an das von dessen metallischem Material abweichende Ausdehnungsverhalten des Faserverbundmaterials in radialer Richtung elastisch oder flexibel - das heißt mit reduzierter Umfangssteifigkeit - ausgebildet. Der metallische Befestigungsflansch kann somit der thermisch bedingten Dehnung bzw. Kontraktion des Faserverbundmaterials folgen. Die durch die reduzierte Umfangssteifigkeit des Befestigungsflansches unter der Wirkung von Fliehkräften am Befestigungsbund auf das Faserverbundmaterial wirkenden Lasten werden dadurch aufgefangen, dass in Höhe der Verbindungsstelle des Einlaufkonus mit dem Haltering ein in Umfangsrichtung verlaufender Faserverbundgurt gewickelt ist. Aufgrund des - vorzugsweise in die Wand des Einlaufkonus integrierten - Faserverbundgurtes kann zudem in dem Verbindungsbereich mit dem Haltering eine Wandstärke erzielt werden, die annähernd der Wandstärke in den anderen Einlaufkonusbereichen entspricht und dennoch den Anforderungen an eine sichere und dauerhafte Verbindung mit dem Haltering mithilfe bestimmter Befestigungselemente, wie beispielsweise Schraubenbolzen, genügt. Aufgrund der unterschiedlichen thermischen Eigenschaften in der Verbindung erzeugte Eigenspannungen werden durch die vorgeschlagene Wickelstruktur im Befestigungsbereich in Kombination mit der verminderten Umfangssteifigkeit des Befestigungsflansches reduziert und dadurch bedingte Relativbewegungen zwischen den aus unterschiedlichen Werkstoffen bestehenden Bauteilen können verringert werden. Aufgrund der durch den Faserverbundgurt erreichbaren nahezu gleichmäßigen Wandstärke des Einlaufkonus ist zudem der Herstellungsaufwand bei verbesserter Qualität gering und eine zuverlässige zerstörungsfreie Prüfung möglich.

In vorteilhafter Weiterbildung der Erfindung wird die Elastizität bzw. verringerte Umfangssteifigkeit des Befestigungsflansches durch dessen Segmentierung, das heißt dessen Ausbildung aus einer Vielzahl von im Abstand am Haltering vorgesehenen Befestigungslaschen erreicht.

In Ausgestaltung der Erfindung besteht das zur Herstellung des Einlaufkonus eingesetzte Faserverbundmaterial, und zwar auch des Gurtes, aus in ein Harz eingebetteten Kohlenstoff- und Glasfasern. Die Fasern des in Umfangsrichtung am Einlaufkonus ausgebildeten Faserverbundgurtes verlaufen in einem flachen Winkel zueinander.

In weiterer Ausgestaltung der Erfindung verläuft die am segmentierten Befestigungsflansch des Halterings anliegende Anlagefläche des Einlaufkonus bzw. Befestigungsbundes vorzugsweise im Wesentlichen parallel zur äußeren Mantelfläche des Einlaufkonus.

Ein Ausführungsbeispiel der Erfindung wird anhand der Zeichnung, in der
- Fig. 1: eine Teilansicht eines mit dem Fan eines Gastur- binentriebwerks über einen Haltering und einen Befestigungsbund verbundenen Einlaufkonus;
- Fig. 2: eine Schnittansicht eines Einlaufkonus in einer weiteren Ausführungsform des mit dem Haltering verschraubten Befestigungsbundes; und
- Fig. 3: eine detaillierte Schnittansicht des nicht im Bereich einer Schraubverbindung liegenden Befes- tigungsbundes
zeigt, näher erläutert.

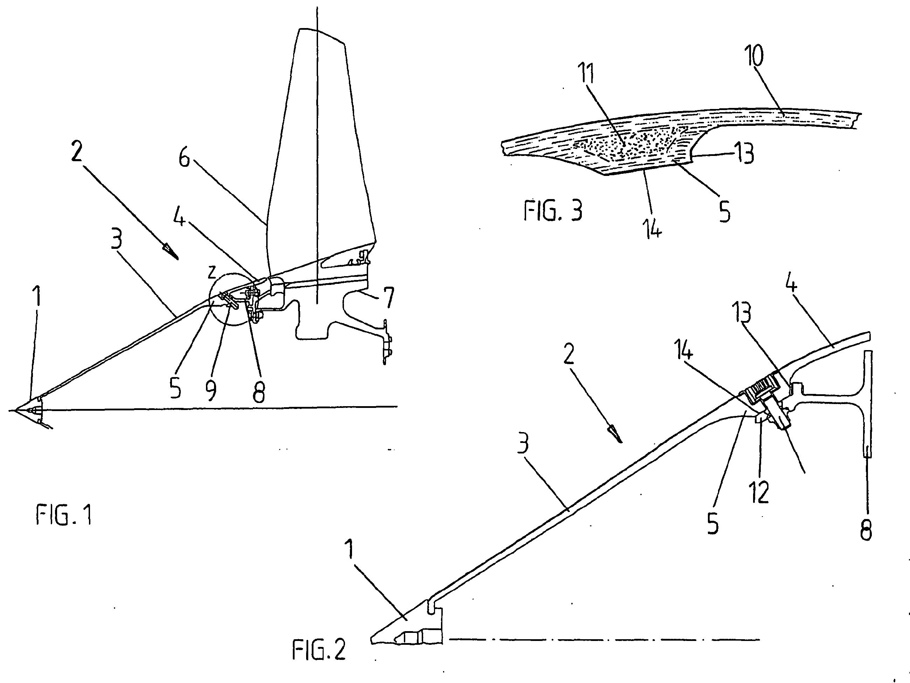

Der mit einer separat gefertigten Konusspitze 1 versehene Einlaufkonus 2 umfasst ein Konusteil 3 und ein Verkleidungsteil 4 sowie einen im Übergangsbereich zwischen Konus- und Verkleidungsteil ausgebildeten Befestigungsbund 5. Das Konusteil 3, der Befestigungsbund 5 und das Verkleidungsteil 4 sind einstückig aus Faserverbundmaterial, bestehend aus Kohlenstofffasern, Glasfasern und einem Harz, gefertigt. Die Verbindung des Einlaufkonus 2 mit dem Fan 6 eines Gasturbinentriebwerks erfolgt über einen an der Fanrotorscheibe 7 befestigten Haltering 8. Der Befestigungsbund 5 stützt sich gemäß Fig. 1 mit einer axialen und einer radialen Anschlagfläche am Haltering 8 ab. Bei der in Fig. 2 dargestellten Ausführungsform weist der Befestigungsbund 5 eine axiale Anschlagfläche 13 und eine schräge, zur Mantelfläche des Einlaufkonus 2 parallele - konische - Anschlagfläche 14 auf, die an dementsprechend ausgerichteten Anschlagflächen des Halterings 8 zur Anlage kommen. Zur Befestigung sind in Durchgangsbohrungen des Befestigungsbundes 5 und des Halteringes 8 angeordnete Verbindungselemente, hier Schraubenbolzen 9, vorgesehen. Insbesondere aus Fig. 2 ist erkennbar, dass der Einlaufkonus 2 im Bereich seines Befestigungsbundes 5 mit einem konisch ausgebildeten Befestigungsflansch 12 verschraubt ist, dessen Konizität mit der des Einlaufkonus 2 übereinstimmt. Der Befestigungsflansch 12 ist jedoch segmentiert, das heißt aus einer Vielzahl von Befestigungslaschen (nicht dargestellt) bestehend, und damit in gewissem Maße radial elastisch verformbar ausgebildet, so dass das unterschiedliche thermische Ausdehnungsverhalten zwischen den miteinander verbundenen Bauteilen ausgeglichen wird. Mit dem Verkleidungsteil 4, das bis nahe an die Fanrotorscheibe 7 reicht, werden der Haltering 8 und die entsprechenden Verbindungselemente nach außen hin abgedeckt.

Der Einlaufkonus 2 ist aus sich kreuzenden Kohlenstoff- und Glasfasern gewickelt. Im Bereich des Befestigungsbundes ist in diese Faserwicklung 10 jedoch ein in Umfangsrichtung verlaufender Faserverbundgurt 11, bestehend aus in flachem Winkel zueinander und im Wesentlichen senkrecht zum Hauptfaserverlauf ausgerichteten Glas- und Kohlenstofffasern, integriert. Aufgrund dieses Faserverbundgurtes 11 können die von dem Befestigungsflansch auf den Befestigungsbund übertragenen Kräfte aufgenommen werden. Die Wand des Einlaufkonus 2 im Bereich des Befestigungsbundes 5 kann zudem in einer vergleichsweise geringen Dicke ausgeführt und der Einlaufkonus in einer durchlaufenden Kegelform mit im Wesentlichen gleichbleibender Wandstärke gefertigt werden, so dass der Herstellungsaufwand verringert und eine hohe Qualität erreicht wird und eine zerstörungsfreie Prüfung - als Voraussetzung zur Zulassung als kritisches Bauteil - gewährleistet ist.

In der Kombination der mit dem integrierten Faserverbundgurt erzielten relativ dünnwandigen elastischen und dennoch die auftretenden Lasten aufnehmenden Gestaltung des Befestigungsbereichs des Einlaufkonus 2 mit einer segmentierten und dadurch ebenfalls elastischen Ausbildung des Halteringes 8, dessen konischer Befestigungsflansch 12 in Umfangsrichtung im Abstand angeordnete Befestigungslaschen (nicht dargestellt) aufweist, kann das unterschiedliche thermische und elastische Verhalten des aus Metall bestehenden Halterings 8 und des an diesem abgestützten, aus Faserverbundmaterial bestehenden Einlaufkonus kompensiert werden. Das heißt, die durch die unterschiedlichen Werkstoffeigenschaften in der Verbindung der beiden Bauteile bedingten Eigenspannungen und dadurch bewirkte Relativbewegungen zwischen den aneinander stoßenden Bauteilen werden reduziert, so dass letztlich die Schädigungstoleranz des den Einlaufkonus samt Haltering umfassenden Gesamtsystems erhöht wird.

### Bezugszeichenliste

- 1: Konusspitze
- 2: Einlaufkonus
- 3: Konusteil
- 4: Verkleidungsteil
- 5: Befestigungsbund
- 6: Fan
- 7: Fanrotorscheibe
- 8: Haltering
- 9: Schraubenbolzen
- 10: Faserwicklung von 2 in Längsrichtung
- 11: Faserverbundgurt - Faserwicklung in Um- fangsrichtung
- 12: konischer Befestigungsflansch
- 13: axiale Anschlagfläche
- 14: konische Anschlagfläche,

## Patentansprüche

1. Einlaufkonus mit einem Haltering, für ein Gasturbinentriebwerk, woher der Einlaufkonus einstückig aus Faserverbundmaterial mit sich kreuzenden Faserlagen gewickelt ist und über einen an dessen Innenseite angeformten Befestigungsbund (5) mit einem Befestigungsflansch (12) des an einer Fanrotorscheibe (7) befestigten metallischen Halterings (8) verbunden ist, **dadurch gekennzeichnet, dass** der Befestigungsflansch (12) des Halterings (8) zur Anpassung an das von dem metallischen Werkstoff abweichende thermische Ausdehnungsverhalten des Faserverbundmaterials radial flexibel ausgebildet ist und im Bereich des Befestigungsbundes (5) ein in Umfangsrichtung des Einlaufkonus (2) verlaufender Faserverbundgurt (11) zur Aufnahme der auf den Befestigungsbund (5) wirkenden Kräfte gewickelt ist.

2. Einlaufkonus nach Anspruch 1, **dadurch gekennzeichnet, dass** der Befestigungsflansch (12) durch eine segmentierte Ausbildung elastisch verformbar ist und eine verminderte Umfangssteifigkeit aufweist.

3. Einlaufkonus nach Anspruch 2, **dadurch gekennzeichnet, dass** der Befestigungsflansch (12) aus in Umfangsrichtung im Abstand am Haltering (8) angeformten und somit elastisch beweglichen Befestigungslaschen gebildet ist.

4. Einlaufkonus nach Anspruch 1, **dadurch gekennzeichnet, dass** der Faserverbundgurt (11) in das Faserverbundmaterial des Einlaufkonus (2) integriert ist.

5. Einlaufkonus nach Anspruch 1, **dadurch gekennzeichnet, dass** der Faserverbundgurt aus in ein Harz eingebetteten, in flachem Winkel zueinander verlaufenden Kohlenstoff- und Glasfasern besteht.

6. Einlaufkonus nach Anspruch 1, **dadurch gekennzeichnet, dass** eine am Befestigungsflansch (12) anliegende Anlagefläche (14) des Befestigungsbundes (5) im Wesentlichen parallel zur äußeren Mantelfläche des Einlaufkonus (2) verläuft.

7. Einlaufkonus nach Anspruch 1, **dadurch gekennzeichnet, dass** dieser eine durchgehende Kegelform mit gleicher oder im Bereich des Befestigungsbundes (5) nur geringfügig größerer Wandstärke aufweist.

## Claims

1. Intake cone with a retaining ring for a gas-turbine engine, with the intake cone being wound in one piece from fiber compound material with fiber layers crossing one another and being attached via a mounting collar (5) formed on the inner side of the intake cone to a mounting flange (12) of the metallic retaining ring (8) attached to a fan rotor disk (7), **characterized in that** for adaptation of the thermal expansion behaviour of the metallic material to the differing thermal expansion behaviour of the fiber compound material, the mounting flange (12) of the retaining ring (8) is provided with radial flexibility and that in the area of the mounting collar (5) a fiber compound belt (11) extending in the circumferential direction of the intake cone (2) is wound for taking up the forces acting upon the mounting collar (5).

2. Intake cone in accordance with Claim 1, **characterized in that** the mounting flange (12) due to its segmented design is elastically deformable and features reduced circumferential stiffness.

3. Intake cone in accordance with Claim 2, **characterized in that** the mounting flange (12) is formed from attaching links provided in the circumferential direction at a certain distance on the retaining ring (8) and hence being elastically moveable.

4. Intake cone in accordance with Claim 1, **characterized in that** the fiber compound belt (11) is integrated into the fiber compound material of the intake cone (2).

5. Intake cone in accordance with Claim 1, **characterized in that** the fiber compound belt consists of carbon and glass fibers embedded in a resin and extending at a shallow angle to each other.

6. Intake cone in accordance with Claim 1, **characterized in that** a locating surface (14) of the mounting collar (5), bearing on the mounting flange (12), extends essentially parallel to the external lateral surface of the intake cone (2).

7. Intake cone in accordance with Claim 1, **characterized in that** the intake cone features a continuous conical shape with constant or only slightly increasing wall thickness in the area of the mounting collar (5).

## Revendications

1. Cône d'entrée avec un anneau de maintien, destiné à un moteur à turbine à gaz, sachant que le cône d'entrée en matériau composite renforcé par des fibres est rubané avec des couches de fibres se croisant pour former une seule pièce, et, par l'intermédiaire d'un épaulement de fixation (5) formé sur sa face intérieure, est relié à une bride de fixation (12) de l'anneau de maintien métallique (8) fixé à un disque de rotor de soufflante (7), **caractérisé en ce que** la bride de fixation (12) de l'anneau de maintien (8) est conçue de manière flexible dans le sens radial afin de s'adapter au comportement de dilatation thermique du matériau composite renforcé par des fibres différent de celui du matériau métallique, et que dans la zone de l'épaulement de fixation (5) est rubanée une membrure renforcée par des fibres (11) s'étendant dans le sens circonférentiel du cône d'entrée (2) et destinée à absorber les forces agissant sur l'épaulement de fixation (5).

2. Cône d'entrée selon la revendication n° 1, **caractérisé en ce que** la bride de fixation (12) est déformable par élasticité grâce à une structure segmentée et présente une rigidité circonférentielle réduite.

3. Cône d'entrée selon la revendication n° 2, **caractérisé en ce que** la bride de fixation (12) est formée par des pattes de fixation façonnées dans le sens circonférentiel à distance de l'anneau de maintien (8) et donc mobiles par élasticité.

4. Cône d'entrée selon la revendication n° 1, **caractérisé en ce que** la membrure renforcée par des fibres (11) est intégrée dans le matériau composite renforcé par des fibres du cône d'entrée (2).

5. Cône d'entrée selon la revendication n° 1, **caractérisé en ce que** la membrure renforcée par des fibres est constituée par des fibres de carbone et de verre noyées dans une résine et s'étendant selon un angle obtus entre elles.

6. Cône d'entrée selon la revendication n° 1, **caractérisé en ce qu'**une surface d'appui (14) de l'épaulement de fixation (5) entrant en contact avec la bride de fixation (12) s'étend quasiment parallèlement à la surface latérale extérieure du cône d'entrée (2).

7. Cône d'entrée selon la revendication n° 1, **caractérisé en ce que** qu'il présente une forme conique continue avec une épaisseur de paroi constante ou seulement légèrement augmentée dans la zone de l'épaulement de fixation (5).
